# EUROPEAN PATENT APPLICATION

(11) **EP 4 257 969 A1**
(43) Date of publication of application: **11.10.2023**
(21) Application number: 22382341.0
(22) Date of filing: 08.04.2022
(51) Int. Cl.: G01N 29/04, G01N 29/22, G01N 29/28

(54) **NON-DESTRUCTIVE INSPECTION DEVICE AND METHOD OF STRUCTURAL PARTS OF AN AIRCRAFT**

(71) Applicant: Airbus Operations, S.L.U., 28906 Getafe (Madrid) (ES)
(72) Inventor: MIGUEL GIRALDO, Carlos, 28906 Getafe (ES); SANCHO GUTIERREZ, Jose Luis, 28906 Getafe (ES)
(74) Representative: Elzaburu S.L.P.

(57) **Abstract**

Non-destructive inspection device of structural parts of an aircraft, the aircraft structural parts comprising an area to be inspected, the inspection device comprising:
- at least one ultrasonic transducer (2) configured to emit an ultrasonic beam,
- a support element (1) holding the at least one ultrasonic transducer (2), the support element (1) configured to be in contact with the area to be inspected, and
- clamping means (3) in connection with the support element (1) and configured to clamp the support element (1) to the area to be inspected.

## Description

### Field of the invention

The present invention relates to the field of permanent, i.e., installed on the aircraft, non-destructive inspection of aeronautical complex structural parts such as coupling areas of fuselage frames. The device is applicable to structural areas of the aircraft requiring frequent inspections.

### Background of the invention

Structural parts of an aircraft refer to a part of the aircraft that carries a load.

Some structural parts of an aircraft ensure the function of coupling at least two portions of the aircraft structures. These coupling areas may comprise, for instance, two metallic plates located on both sides of the aircraft elements to be joined. The metallic plates comprise holes for the insertion of fasteners or rivets.

The area of the holes of the metallic plates is subjected to a combination of mechanical stress, environmental factors, and material susceptibilities which require their regular monitoring. Such regular monitoring involves costs of inspection and replacement if need be.

Non-destructive testing inspection is one of a wide group of inspection techniques used in science and technology industry to evaluate the properties of a material, component or system without causing damage.

The inspection of aircraft parts, especially the internal side of plates and in hidden rivet holes, entails important efforts in terms of preparation, assembly/disassembly to allow access to the area to be inspected. Inspection and evaluation have to be performed by certified inspectors who may not be easily available anytime and everywhere.

Moreover, it is difficult to access the area to be inspected due to space limitations and congestion caused by the high number of systems located in the vicinity.

In addition, these inspection processes are frequently required at certain time intervals during the service life of the aircraft and therefore contribute to increase maintenance costs and aircraft ground time.

The known inspection process of parts of an aircraft is performed by manual inspection procedures requiring intensive and costly works in terms of preparation for accessing the areas to be inspected. In addition, they require certified ultrasonic non-destructive inspectors as previously stated.

If for instance, the inspection process is performed every twelve months on a total of sixteen metallic couplings, each inspection lasts approximately seventy hours and hence involves high costs.

### Summary of the invention

The invention consists of a non-destructive inspection device that hosts at least one ultrasonic transducer, conventional transducer or phased array of transducers, and that comprises means for being properly fitted to the area of the structural part to be inspected to allow either permanent installation or removal, when necessary, for instance, to enable access to the area being monitored.

The non-destructive inspection device object of the invention comprises:
- At least one ultrasonic transducer configured to emit an ultrasonic beam,
- A support element holding the ultrasonic transducer and being configured to be in contact with the area to be inspected. Hence, the support element is a structural element that bears all or part of the weight of the ultrasonic transducer or transducers, holding it. The support element may be in direct contact with the area to be inspected or in direct contact with an intermediate element located between the support element and the area to be inspected. This intermediate element may be a coupling film having the function of promoting the transmission of ultrasonic beams from the support element to the area to be inspected.
- Clamping means in connection with the support element and configured to clamp the support element to the area to be inspected, for instance, to the boundary of said area. The clamping means therefore fastens the support element to the area to be inspected, permanently or removably.

The device object of the invention is easy to install. As it is configured for being permanently installed, it allows a convenient inspection of the area because it does not need to be installed each time the inspection has to be performed. Moreover, it may be disassembled, if needed, for instance, to gain access to the area to be inspected to double check the area with another inspection device or method. Thus, the above device can be easily disassembled and assembled again if the information of the inspection device need to be double checked by conventional ultrasonic procedures or even by other inspection methodologies requiring access to the area.

The device is also durable, robust and lightweight. Additionally, the design and selection of the material are relevant for achieving a lightweight monitoring device.

The ultrasonic transducers are preferably configured in accordance with the area to be monitored. The device may comprise one ultrasonic transducer or a set of ultrasonic transducers. The ultrasonic transducers may work according to conventional ultrasound or phased array technique.

The number of ultrasonic transducers, the way to interrogate them or even the distribution of the ultrasonic transducers in the device may vary from one inspection area to another. The main criteria are to ensure that any inspection area is accessible for at least an ultrasonic beam, and that changes in this ultrasonic beam due to for instance the presence of cracks can be detected by analyzing the transmitted or the reflected beam.

The geometry of the device is adapted to the configuration, shape, dimensions, thickness and fasteners of the area to be inspected. The device object of the invention is configured to be adjusted to the area to be inspected, for instance, to the thickness of the area to be inspected, i.e., by clamping the support element to the boundaries of the area to be inspected.

Also, the installation of the device and its configuration to make it removable varies according to the shape of the area to be inspected.

In an embodiment, these ultrasonic transducers can be fitted to the support element, or the ultrasonic transducers may be manufactured directly onto the support element, for example, by deposition of the transducer on the support element.

The inspection device is designed so that its installation enables the application of a necessary force to ensure permanent coupling between the ultrasonic transducers and the area to be inspected. The clamping means allows the application of an appropriate pressure to the ultrasonic transducers to ensure ultrasonic coupling.

The device therefore is a light-compact tool comprising ultrasonic transducers joined to the inspection area. The device is configured to remain installed on the aircraft and would not be disassembled except in cases where for some reason it is, for instance, necessary to perform the inspection by conventional means.

The claimed inspection device may be applied to a wide variety of ultrasonic techniques: pulse echo, through transmission, longitudinal or shear beams and conventional or phased array techniques. The possibility of choosing among different techniques enables to modify, even after the installation of the device in the aircraft, the inspection parameters such as sensibility, resolution or defect characterization capabilities in function of the requirements of the need.

It is also an object of the present invention a non-destructive inspection method of structural parts of an aircraft comprising the following steps:
- providing a non-destructive inspection device comprising at least one ultrasonic transducer configured to emit an ultrasonic beam, a support element holding the at least one ultrasonic transducer and clamping means in connection with the support element,
- locating the support element in contact with the area to be inspected,
- acting on the clamping means so that the support element is clamped to the area to be inspected,
- activating the ultrasonic transducer when the inspection has to be performed.

According to the above, the main advantages of the invention are:
a) It solves the problem of difficult access to the area to be inspected due to space limitations and congestion due to a high number of systems located in the vicinity.
b) The permanent installation of the claimed inspection device avoids the costs of accession to the inspection area, preparation of the inspection procedure or the need to have a certified inspector to perform the inspection.
c) Simple, flexible and versatile device and inspection method enabling its application into many structural parts.
d) The device can be applied to different structural materials, metallic, composites or ceramic, and therefore monitoring different types of defects such as cracks, delaminations, debondings, etc... or even some geometrical parameters such as the thickness of the parts.
e) The claimed invention, unlike others, does not require permanent bonded of the ultrasonic sensors and can be assembled and disassembled according to in-service/maintenance needs. This concept hence requires less certification efforts due to the difficulty to demonstrate strength and durability of the bonded process during the complete in-service aircraft life.
f) It allows reliable and safe detection of cracks starting from fastener holes and located in hidden configurations between two plates.
g) The invention provides permanent and reasonable ultrasonic coupling during its operational life.
h) The inspection concept may incorporate the BITE philosophy so that any failure in the device would be detected by the normal working monitoring procedure. The device inherently allows self-diagnosis and therefore ensures correct operation.

### Description of the figures

To complete the description and to provide for a better understanding of the invention, a set of drawings is provided. Said drawings form an integral part of the description and illustrate preferred embodiments of the invention. The drawings comprise the following figures.
Figure 1 shows a perspective view of a coupling area of an aircraft, specifically two adjacent portions of a frame and the corresponding coupling plates. It also shows a schematic representation of the location of an array of ultrasonic transducers intended for the represented coupling area.
Figure 2 shows a perspective view of an embodiment of a non-destructive inspection device.
Figure 3 shows a lateral view of another embodiment of a non-destructive inspection device.
Figure 4 shows a front view of the embodiment of the non-destructive inspection device of figure 3.
Figure 5 shows an opposite lateral view of the embodiment of the non-destructive inspection device of figure 3.
Figure 6 shows a perspective view of an embodiment of a support element.
Figure 7 shows a perspective view of a portion of a fuselage and a portion of a frame of an aircraft and the embodiment of the non-destructive inspection device of figures 3 to 6 fitted to the shown portion of the frame and the wiring of the ultrasonic transducers.

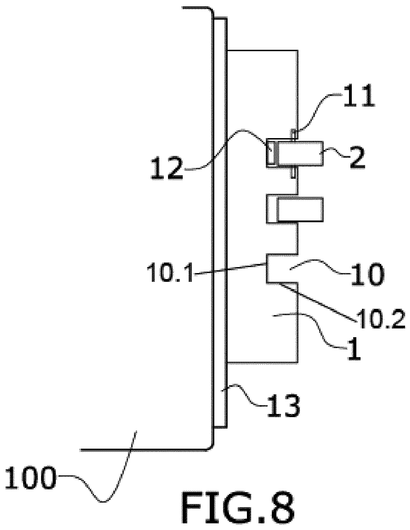

Figure 8 shows a schematic cross section of an embodiment of the non-destructive inspection device and a portion of a structural aircraft part.

### Detailed description of the invention

Referring to the accompanying figures, in the case of the requirement of permanent inspection device in other structural parts very different geometrically than coupling areas, the design has to be adapted and customized to ensure the requirements of easy assembly/disassembly, performance, durability, robustness and lightness. The figures show a set of ultrasonic transducers (2) but a device comprising at least one ultrasonic transducer (2) is object of the invention.

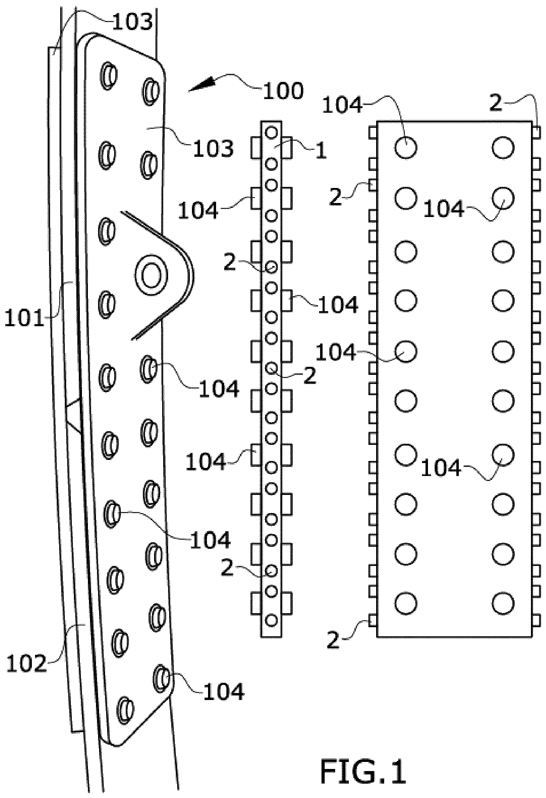

Figure 1 discloses a section of a frame (100) of an aircraft. The frame (100) comprises a first portion (101) and a second portion (102) that are joined by means of two plates (103) located at the inner side and at the outer side of the frame (100). The plates (103) are joined to the frame (100) by means of rivets (104) which go through holes performed in the frame (100) and in the plates (103).

Figure 1 also discloses a front and a lateral view of the arrangement of an array of ultrasonic transducers (2). The ultrasonic transducers (2) are located in the lateral sides of the frame (100), i.e., in the rear end and in the forward end of the frame (100). The ultrasonic transducers (2) may comprise an ultrasonic delay (wedge) to ensure the proper incidence of the ultrasonic beam in order to detect cracks in any direction. The ultrasonic transducers (2) are usually located such that they emit ultrasonic beams in a direction perpendicular to the possible cracks. In the case of frames (100) is the longitudinal direction of the rivets (104) excepting the radius area wherein the ultrasonic inspection beam is directed to be as much as possible to the crack through the refraction of the beam by a wedge.

The ultrasonic transducers (2) may be fitted into the support element (1) or, alternatively, they can be manufactured together with the support element (1).

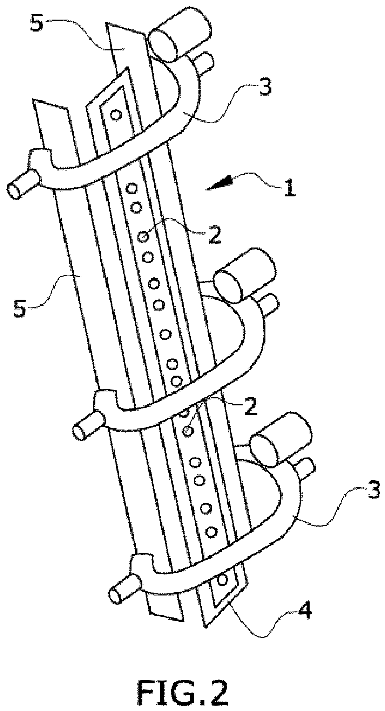

Figure 2 discloses an embodiment of the non-destructive inspection device object of the invention. The device comprises:
- A support element (1) holding the set of ultrasonic transducers (2). More particularly, the shown support element (1) comprises a first part (4) holding the set of ultrasonic transducers (2) and a second part (5) located adjacent to the first part (4) and in contact with the clamping means (3). The second part (5) is configured to be located against a surface of the area to be inspected for joining the support element (1) to the area to be inspected. As previously stated, this first part (4) can also comprise the ultrasonic transducers (2) that are manufactured together integrated therein (4).

The second part (5) may be in the same plane as the surface of the area to be inspected with which the first part (4) is in contact or in a perpendicular plane or in a plane forming a different angle with the surface with which the first part (4) is in contact.

The shown second part (5) is perpendicular to the first part (4). The second part (5) comprises at least a plate. In the shown embodiment the perpendicular direction of the plate of the second part (5) is configured to form an angle of 90º with the usual direction of the beam adapted to be emitted by the ultrasonic transducers (2). In the shown embodiment the two plates of the second part (5) form an angle of 90º with the first part (4).

As previously mentioned, the plate of the second part (5) may form any other angle with the first part (4) because the shape and location of the second part (5) depends on the shape of the part of the aircraft to be inspected.

More particularly, the first part (4) of the support element (1) comprises a plate holding the ultrasonic transducers (2) and the second part (5) comprises two plates located at 90º with respect to the plate holding the ultrasonic transducers (2). Hence, the plates of the second part (5) rest on the surface of the metallic plates (103) of the coupling area and the ultrasonic transducers (2) are located facing a lateral side, for instance, the lateral forward side, of the frame (100) and of the metallic plates (103).
- Clamping means (3) in connection with the support element (1) and configured to be joined to the area to be inspected achieving the appropriate fitting of the different elements of the inspection device to the coupling area shown in the figures. The shown clamping means (3) are joined to the two plates of the second part (5) of the support element (1) such that the two plates are pressed against the area to be inspected, specifically against the surface of the metallic plates (103) having the heads of the rivets (104), to ensure the ultrasonic coupling of the ultrasonic transducers (2).

The support element (1) holds the ultrasonic transducers (2) and therefore is machined accordingly to the appropriate arrangement of the ultrasonic transducers (2).

The material of the support element (1) may be compatible with the ultrasonic transducers (2).

In an embodiment, the support element (1) comprises cavities (10) for the location of the ultrasonic transducers (2). The cavity (10) comprises a base (10.1), walls (10.2) and a longitudinal direction. In the shown embodiment the cavities (10) also comprise an opening.

These cavities (10) are designed to ensure the continuity of the ultrasonic beam from the piezoelectric of the ultrasonic transducer (2) to the support element (1). To allow the mentioned continuity, there must be no air at the interface between the two elements, i.e., between the ultrasonic transducer (2) and the support element (1). To ensure this, the cross-section of the cavity (10) may be equal, epsilon manufacturing tolerance at least, to the cross-section of the ultrasonic transducers (2). Additionally, the device may comprise a sealing ring (11) located on the walls of the cavity (10) surrounding the ultrasonic transducer (2) and configured to contact the ultrasonic transducer (2) to seal it (2) against the cavity (10) in the longitudinal direction of the cavity (10) so as to perform the technical function of a seal, i.e., being a tight closure.

Alternatively, in case the ultrasonic transducers (2) are manufactured directly onto the support element (1), the sealing ring (11) is not necessary as the ultrasonic transducers (2) are manufactured and fit perfectly into their cavities (10) by, for instance, deposition of the transducer (2) on the support element (1).

In an embodiment, the cavity (10) may comprise a coupling which may be a permanent coupling, for instance a bond or an adhesive, or a removable coupling (12), for instance a grease or oil, located at the base of the cavity (10) and in contact with the ultrasonic transducer (2) to ensure a proper transmission of the ultrasonic beam at the interface of the ultrasonic transducer (2) and the support element (1). It is installed such that there is no air remaining.

For the same reasons, in an embodiment, the inspection method may comprise the step of adding a coupling film (13) configured to be located between the support element (1) and the area to be inspected to ensure the continuity of the ultrasonic beam between the support element (1) and the area to be inspected. Said coupling film (13) is conveniently selected according to the material of the inspection area and piezo transducers and/or wedge. The coupling film (13) may be an adhesive film or an oil or gel film.

In an embodiment, the clamping means (3) also joins the different parts (4, 5) of the support element (1).

The dimension of the support element (1) is based on the length and width of the area to be inspected, the proper arrangement of the ultrasonic transducers (2), the shape of its first part (4) and its second part (5) and the shape and location of the clamping means (3).

In the shown embodiment, the second part (5) of the support element (1) may be fitted to the rivets (104) heads. For this purpose, the second part (5) may incorporate holes matching the bolts/rivet (104) heads.

The material of the second part (5) of the support element (1) is, for instance, a carbon fiber reinforced polymer (CFRP) due to strength and lightness requirements.

The dimension of the second part (5) of the support element (1) is based on the length and width of the area to be inspected and on the lateral surfaces and boundaries of said inspected area.

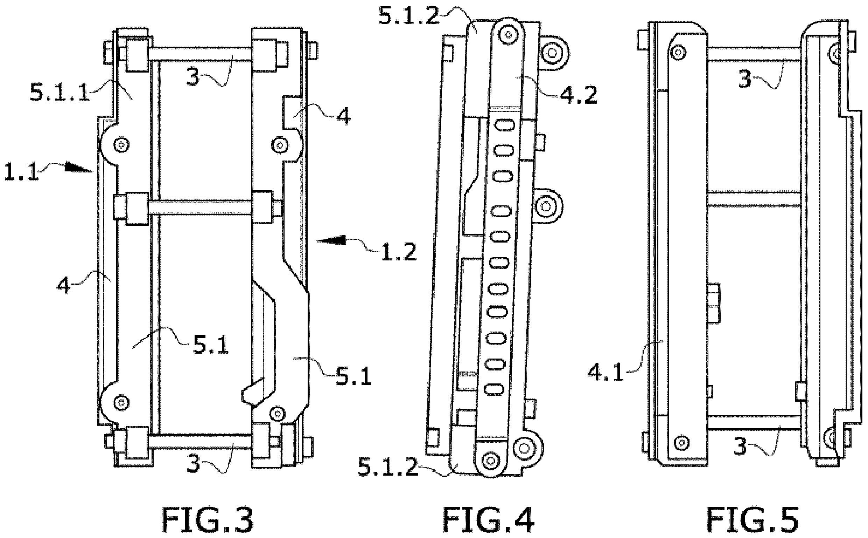

Figures 3 to 5 show a lateral and front view of an embodiment of the non-destructive inspection device intended to a frame (100) of an aircraft. The shown device is intended to be coupled to, for instance, a portion of the frame (100) to be inspected according to figure 1.

The shown device comprises two support elements (1) each comprising a set of ultrasonic transducers (2), not shown. The shown device comprises:
- a first support element (1.1) comprising a first set of ultrasonic transducers (2) being configured to be in contact with a first area to be inspected,
- a second support element (1.2) comprising a second set of ultrasonic transducers (2) being configured to be in contact with a second area to be inspected, and
- clamping means (3) in connection with the first support element (1.1) and with the second support element (1.2) and configured to join both support elements (1.1, 1.2) between them and to the area to be inspected.

One of the support elements (1.1, 1.2) is intended to inspect the forward row of rivets (104) shown in figure 1 and the other support element (1.1, 1.2) is intended to inspect the rear row of rivets (104) shown in figure 1.

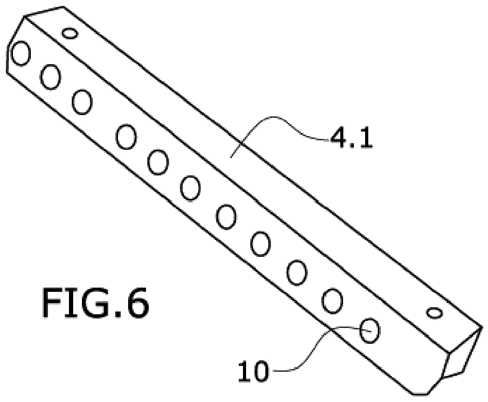

Figure 6 discloses an embodiment of a first part (4) of the support element (1). It comprises an elongated profile (4.1) having a square or rectangular cross-section. In the shown embodiment it further comprises cavities (10) in at least one of its sides to allocate the ultrasonic transducers (2), not shown.

The first part (4) may be made of polymethacrylate (PMMA) as a typical wedge material for directing the ultrasonic beam from the piezoelectric transducers to the inspected part.

In the shown embodiment, the first part (4) also comprises a metallic plate (4.2) covering the elongated profile (4.1). Said metallic plate (4.2) also comprises holes for allowing their connection wiring (20) to exit the device. The metallic plate (4.2) prevents the ultrasonic transducers (2) from being removed from the device and secures the ultrasonic coupling.

The shown support element (1) comprises a second part (5) configured to properly clamp the first part (4) to the inspection area. More specifically, in the shown embodiment it comprises two side pieces (5.1) that comprise:
- A main part (5.1.1) located onto a lateral side of the elongated profile (4.1) and surpassing it (4.1) in order to rest on the plates (103) of the coupling area when fitted.
- An extension (5.1.2) directed towards the side of the elongated profile (4.1) comprising the entrance of the cavities (10) for inserting the ultrasonic transducers (2). The extension (5.1.2) forms 90º with the main part (5.1.1) of the side piece (5.1) and it helps to attach the side piece (5.1) and the elongated profile (4.1) together.
- Holes for inserting rivets for joining the side pieces (5.1) to the elongated profile (4.1).

Additionally, the shown inspection device comprises clamping means (3) in connection with both support elements (1.1, 1.2) and configured to join the support elements (1.1, 1.2) to the area to be inspected.

In an embodiment, the clamping means (3) comprises bolts extending between the first and the second support elements (1.1, 1.2) such that both support elements (1.1, 1.2) rest tightly against the two areas to be inspected of the frame (100) of the aircraft.

In the shown embodiment, the two second parts (5) comprise holes for inserting the mentioned bolts. More specifically, both side pieces (5.1) of every support element (1.1, 1.2) comprises holes for inserting the mentioned bolts of the clamping means (3).

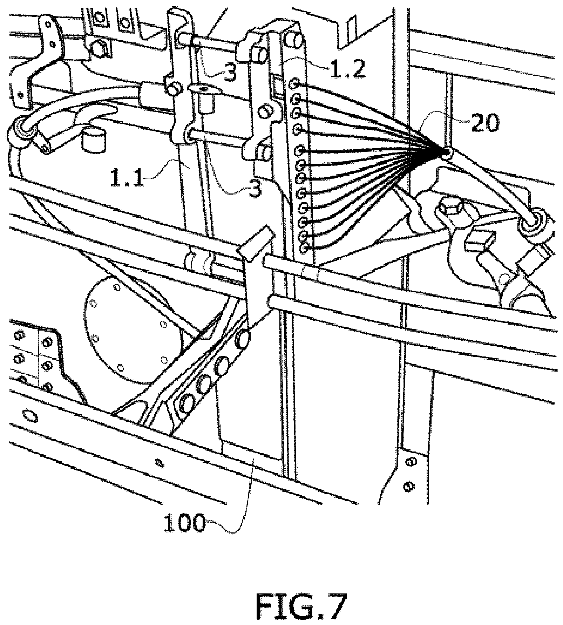

Figure 7 shows a portion of a frame (100) of an aircraft. The areas to be inspected are the forward and the rear row of rivets (104) as shown in figure 1. Figure 7 discloses two support elements (1.1, 1.2), one located in the forward end of the frame (100), and one located in the rear end of the frame (100). A set of ultrasonic transducers (2), not shown, is held in every support element (1.1, 1.2). The connection wiring (20) of the ultrasonic transducers (2) is shown in figure 7. Clamping means (3), specifically bolts, extends between both support elements (1.1, 1.2) such that both support elements (1.1, 1.2) are pressed against the areas to be inspected.

According to the above, the non-destructive inspection method object of the invention comprises the following steps:
- providing a non-destructive inspection device comprising at least one ultrasonic transducer (2) configured to emit an ultrasonic beam, a support element (1) holding the at least one ultrasonic transducer (2) and clamping means (3) in connection with the support element (1),
- locating the support element (1) in contact with the area to be inspected,
- acting on the clamping means (3) so that the support element (1) is clamped to the area to be inspected,
- activating the ultrasonic transducers (2) when the inspection has to be performed.

As previously stated, the described device is intended for being permanently installed in the aircraft, that is, it is designed to withstand the operation of the aircraft. The device object of the invention would be connected to an inspection equipment that does not need to be installed on the aircraft and that will be connected to the device at scheduled stops of the aircraft. With the device object of the invention is not necessary to gain access to the area to be inspected but only to access an area of the aircraft where the ends of the connecting wiring of the ultrasonic transducers (2) are located.

In an embodiment the non-destructive inspection device is permanently fitted to the area to be inspected and the activation of the ultrasonic transducers (2) is performed when the inspection has to be done. Thus, the ultrasonic transducers (2) become active and send out and receive the ultrasonic beams towards and from the area to be inspected when needed.

But in another embodiment the non-destructive inspection device is fitted to the area to be inspected when the inspection has to be done.

In an embodiment, the device object of the invention comprises an integrated self-diagnosis control by checking the presence of one or several echoes that ensure the device is properly installed and coupled to the structural part to be inspected. The design of the self-diagnosis control is properly done to avoid also false alarms risks.

## Claims

1. Non-destructive inspection device of structural parts of an aircraft, the aircraft structural parts comprising an area to be inspected, the inspection device **characterized in that** it comprises:
- at least one ultrasonic transducer (2) configured to emit an ultrasonic beam,
- a support element (1) holding the at least one ultrasonic transducer (2), the support element (1) configured to be in contact with the area to be inspected, and
- clamping means (3) in connection with the support element (1) and configured to clamp the support element (1) to the area to be inspected.

2. Non-destructive inspection device, according to claim 1, wherein the support element (1) comprises a first part (4) holding the at least one ultrasonic transducer (2) and a second part (5) located adjacent to the first part (4) and in contact with the clamping means (3), the second part (5) being configured to be located against a surface of the area to be inspected for clamping the support element (1) to the area to be inspected.

3. Non-destructive inspection device, according to claim 2, wherein the second part (5) is perpendicular to the first part (4).

4. Non-destructive inspection device, according to claim 2 or 3, wherein the second part (5) of the support element (1) is made of carbon fiber reinforced polymer (CFRP).

5. Non-destructive inspection device, according to any preceding claim 2 to 4, wherein the first part (4) of the support element (1) is made of polypropylene (PMMA).

6. Non-destructive inspection device, according to any preceding claim, wherein the support element (1) comprises at least one cavity (10) for the location of the ultrasonic transducer (2), the cavity (10) comprising a base (10.1), walls (10.2) and a longitudinal direction.

7. Non-destructive inspection device, according to claim 6, wherein the cross-section of the cavity (10) is equal to the cross-section of the ultrasonic transducer (2).

8. Non-destructive inspection device, according to claim 6 or 7, wherein the cavity (10) comprises a coupling (12) in contact with the base (10.1) of the cavity (10) and with the ultrasonic transducer (2) to ensure a proper transmission of the ultrasonic beam between the ultrasonic transducer (2) and the support element (1).

9. Non-destructive inspection device, according to claim 6, 7 or 8, wherein it comprises a sealing ring (11) located on a wall (10.2) of the cavity (10) surrounding the ultrasonic transducer (2), the sealing ring (11) being in contact with the ultrasonic transducer (2) to seal it (2) against the cavity (10).

10. Non-destructive inspection device, according to any preceding claim, wherein it comprises:
- a first support element (1.1) comprising at least one ultrasonic transducer (2) being configured to be in contact with a first area to be inspected,
- a second support element (1.2) comprising at least one ultrasonic transducer (2) being configured to be in contact with a second area to be inspected, and
- the clamping means (3) being in connection with the first support element (1.1) and with the second support element (1.2) and being configured to join both support elements (1.1, 1.2) between them.

11. Non-destructive inspection device, according to any preceding claim, wherein the ultrasonic transducer (1) is adapted to the following ultrasonic techniques: pulse echo, through transmission, longitudinal or shear beams.

12. Non-destructive inspection method of structural parts of an aircraft, the structural parts comprising an area to be inspected, the inspection method **characterized in that** it comprises the following steps:
- providing a non-destructive inspection device comprising at least one ultrasonic transducer (2) configured to emit an ultrasonic beam, a support element (1) holding the at least one ultrasonic transducer (2) and clamping means (3) in connection with the support element (1),
- locating the support element (1) in contact with the area to be inspected,
- acting on the clamping means (3) so that the support element (1) is clamped to the area to be inspected,
- activating the ultrasonic transducer (2) when the inspection has to be performed.

13. Non-destructive inspection method, according to claim 12, wherein the non-destructive inspection device is permanently fitted to the area to be inspected and the activation of the ultrasonic transducers (2) is performed when the inspection has to be done.

14. Non-destructive inspection method, according to claim 12 or 13, wherein the non-destructive inspection device is removed from the area to be inspected to gain access to the area to be inspected.

15. Non-destructive inspection method, according to any preceding claim 12 to 14, wherein it comprises the step of adding a coupling film (13) between the area to be inspected and the support element (1) to ensure a continuity of the ultrasonic beam between the support element (1) and the area to be inspected.
